# EUROPEAN PATENT APPLICATION

(11) **EP 4 683 086 A1**
(43) Date of publication of application: **21.01.2026**
(21) Application number: 24891755.1
(22) Date of filing: 12.11.2024
(51) Int. Cl.: H01M 50/383, H01M 50/367, H01M 50/289, H01M 50/317, H01M 50/375, H01M 50/249

(54) **BATTERY PACK AND VEHICLE INCLUDING SAME**

(30) Priority: 17.11.2023 KR 20230159747
(71) Applicant: LG Energy Solution, Ltd., Seoul 07335 (KR)
(72) Inventor: LEE, Jung-Hoon, Daejeon 34122 (KR); KIM, Soo-Youl, Daejeon 34122 (KR); JUNG, Hye-Mi, Daejeon 34122 (KR); HAN, Min-Hee, Daejeon 34122 (KR)
(74) Representative: Plasseraud IP
(86) International application number: PCT/KR2024/017866
(87) International publication number: WO 2025/105809

(57) **Abstract**

The present disclosure relates to a battery pack including: a plurality of battery cells; and a pack case having a plurality of accommodation spaces configured to respectively accommodate battery cells obtained by dividing the plurality of battery cells, at least one of the plurality of accommodation spaces having a venting portion configured to discharge venting gas released from the battery cell to the outside of the accommodation space, and a venting path configured to be in communication with the venting portion.

## Description

### TECHNICAL FIELD

The present disclosure relates to a battery pack and a vehicle including the same.

This application is based on and claims priority from Korean Patent Application No. 10-2023-0159747, filed on November 17, 2023, with the Korean Intellectual Property Office, the disclosure of which is incorporated herein in its entirety by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of the primary advantage of dramatically reducing the use of fossil fuels and another advantage of not generating by-products resulting from energy use.

Secondary batteries currently widely used include lithium-ion batteries, lithium-polymer batteries, nickel-cadmium batteries, nickel-hydrogen batteries, nickel-zinc batteries, and the like. When a higher output voltage is required, a battery module or battery pack may be configured by connecting a plurality of battery cells in series. In addition, a battery module or battery pack may be configured by connecting multiple battery cells in parallel to increase the charge/discharge capacity. Accordingly, the number of battery cells included in the battery module or pack may be set in various ways depending on the required output voltage or charge/discharge capacity.

Meanwhile, since battery cells undergo chemical reactions during charging and discharging, their performance may deteriorate if they are used at a temperature higher than an appropriate temperature, and if the heat fails to be controlled at the appropriate temperature, unexpected ignition or explosion is more likely to occur. Therefore, if a thermal event such as thermal runaway occurs inside the battery pack, high-temperature gas or flame emitted from the battery cells therein may spread to adjacent battery modules, causing a chain reaction of explosions in the battery modules, which is very dangerous.

Therefore, it is necessary to develop a structure capable of minimizing the thermal energy transferred to adjacent battery modules and preventing or suppressing the propagation of thermal runaway between battery modules when thermal runaway occurs in the battery module.

In addition, it is also necessary to develop a structure capable of quickly discharging high-temperature gases or flames generated in a battery module to the outside of the battery pack when thermal runaway occurs in the battery module, thereby dissipating heat accumulation inside the battery pack.

### DISCLOSURE

### Technical Problem

The present disclosure is designed to solve the problems of the related art, and therefore the present disclosure is directed to providing a battery pack capable of minimizing the thermal energy transferred to adjacent battery modules when thermal runaway occurs in a battery module, thereby preventing or suppressing thermal runaway propagation between the battery modules.

The present disclosure is also to provide a vehicle that includes such a battery pack.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack including: a plurality of battery cells; and a pack case having a plurality of accommodation spaces configured to respectively accommodate battery cells obtained by dividing the plurality of battery cells, at least one of the plurality of accommodation spaces having a venting portion configured to discharge venting gas released from the battery cell to the outside of the accommodation space, and a venting path configured to be in communication with the venting portion.

The pack case may include a cross-beam configured to partition the plurality of accommodation spaces and having the venting path formed therein, and the venting portion may be provided on the cross-beam.

The battery pack may further include a module case configured to accommodate the battery cells provided in each of the accommodation spaces, and having a venting hole formed on one surface facing the venting portion and configured to discharge the venting gas to the outside.

The battery pack may further include a moving member provided inside the venting path to partition the venting path and configured to be at least partially movable by the venting gas.

The volume of the venting path may be configured to expand when the moving member moves by the venting gas.

At least a portion of the moving member may be configured to be elastically deformed by the venting gas.

The battery pack may further include an opening/closing member configured to cover the venting portion and cause the venting portion to be opened by the venting gas or heat.

The opening/closing member may include a cover plate configured to cover the venting portion and to be rotatable by the venting gas, and a hinge portion coupled to the cover plate.

The opening/closing member may be configured to be melted by the heat.

The pack case may include a base frame configured so that the plurality of battery cells are seated thereon and having the venting path formed thereon, and the venting portion may be provided in the base frame.

The pack case may include a cross-beam configured to partition the plurality of accommodation spaces and to be spaced a predetermined distance apart from the battery cell, and the venting portion may be provided between the battery cell and the cross-beam.

The pack case may be configured to have an upper opening, and the battery pack may further include an upper cover coupled to the upper opening of the pack case to seal the respective accommodation spaces.

In addition, in another aspect of the present disclosure, there is provided a vehicle including a battery pack according to the present disclosure.

### Advantageous Effects

According to one aspect of the present disclosure, it is possible to minimize the thermal energy transferred to adjacent battery modules when thermal runaway occurs in a battery module. Therefore, the propagation of thermal runaway between battery modules is able to be prevented or suppressed, thereby ensuring the safety and reliability of the battery pack.

In addition, according to another aspect of the present disclosure, when thermal runaway occurs in a battery module, high-temperature gas or flames generated in each battery module may be respectively discharged to the outside of the battery pack, thereby minimizing the thermal propagation to other battery modules.

In addition, according to another aspect of the present disclosure, since high-temperature gas or flame is quickly discharged to the outside of the battery pack, heat accumulation inside the battery pack is able to be dissipated.

In addition, according to another aspect of the present disclosure, it is possible to prevent or delay events due to thermal runaway of a device, such as fire or explosion, equipped with a battery pack.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view of a battery pack according to an embodiment of the present disclosure.
FIG. 2 is an exploded perspective view of a battery pack according to an embodiment of the present disclosure.
FIG. 3 is a cross-sectional view of a battery pack according to an embodiment of the present disclosure, which may be a cross-sectional view taken along line I - I' in FIG. 1.
FIG. 4 is a perspective view of a battery module included in a battery pack according to an embodiment of the present disclosure.
FIG. 5 is a cross-sectional view of a primary part of a battery pack to which a moving member is applied according to an embodiment of the present disclosure.
FIG. 6 is a drawing illustrating an embodiment in which a moving member moves when a thermal event occurs in the battery pack in FIG. 5.
FIG. 7 is a drawing illustrating another embodiment in which a moving member moves when a thermal event occurs in the battery pack in FIG. 5.
FIG. 8 is a cross-sectional view illustrating a primary part of a battery pack to which an opening/closing member is applied according to an embodiment of the present disclosure.
FIG. 9 is a drawing illustrating the opening/closing member that is opened when a thermal event occurs in the battery pack in FIG. 8.
FIG. 10 is a cross-sectional view of a primary part of a battery pack to which an opening/closing member is applied according to another embodiment of the present disclosure.
FIG. 11 is a drawing illustrating the opening/closing member that is opened when a thermal event occurs in the battery pack in FIG. 10.
FIG. 12 is an exploded perspective view of the opening/closing member applied to the battery pack in FIG. 10.
FIG. 13 is a schematically perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up, down, left, right, front, and back directions are used in this specification, it is obvious to those skilled in the art to which the present disclosure pertains that these terms are only for convenience of explanation with reference the relevant drawings and may vary depending on the position, arrangement, or rotation of the target object or the position of the observer.

For example, in the embodiment of the present disclosure, the X-axis direction shown in the drawing may indicate a front-back direction, the Y-axis direction may indicate a left-right direction perpendicular to the X-axis direction on the horizontal plane (X-Y plane), and the Z-axis direction may indicate an up-down direction (vertical direction) perpendicular to both the X-axis direction and the Y-axis direction.

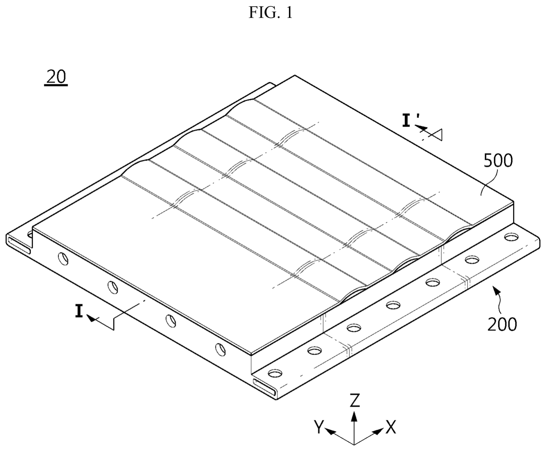

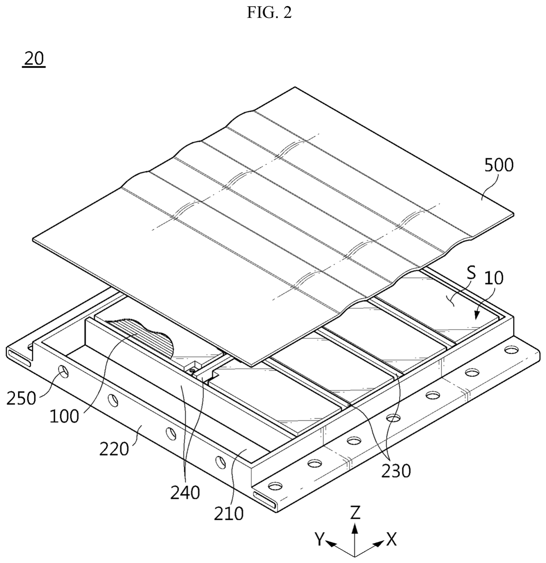

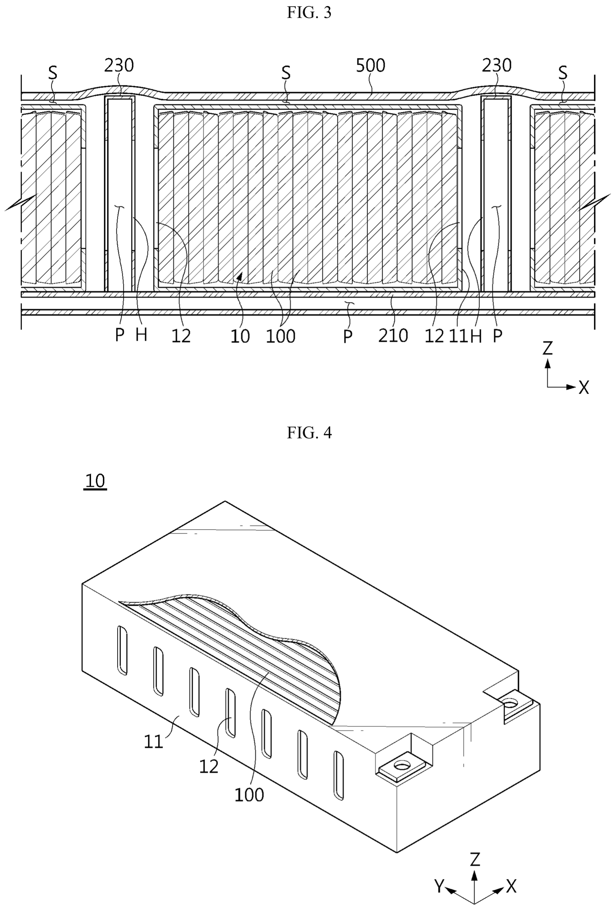

FIG. 1 is a perspective view of a battery pack according to an embodiment of the present disclosure, and FIG. 2 is an exploded perspective view of a battery pack according to an embodiment of the present disclosure. In addition, FIG. 3 is a cross-sectional view of a battery pack according to an embodiment of the present disclosure, which may be a cross-sectional view taken along line I - I' in FIG. 1.

Referring to FIGS. 1 to 3, a battery pack 20 according to an embodiment of the present disclosure may include a battery cell 100 and a pack case 200.

Referring to FIG. 2, a plurality of battery cells 100 may be included. In addition, although not shown in the drawing, the plurality of battery cells 100 may include an electrode assembly, a cell case that accommodates the electrode assembly, and an electrode lead that is connected to the electrode assembly and extends outside the cell case to function as an electrode terminal. In this case, the plurality of battery cells 100 may be electrically connected to each other.

The battery cell 100 may be a pouch-type secondary battery. The cell case of such a pouch-type secondary battery may be configured in a pouch in which a metal layer made of aluminum is interposed between polymer layers.

As illustrated in FIG. 2, a plurality of battery cells 100 may be arranged side by side in the front-back direction (X-axis direction) while standing in the vertical direction (Z-axis direction).

Meanwhile, the present disclosure is not limited to a specific type or shape of the battery cell 100, and various battery cells 100 known at the time of filing the present disclosure may be applied to the battery pack 20 of the present disclosure. In the present embodiment, although a pouch-type secondary battery with high energy density and easy stacking will be described as shown in the drawing, it is obvious that a cylindrical or prismatic secondary battery may also be applied to the battery cell 100.

The pack case 200 may be configured to accommodate a plurality of battery cells 100. The pack case 200 may have a plurality of accommodation spaces S configured to respectively accommodate battery cells obtained by dividing the plurality of battery cells. The accommodation space S is an empty space and may be configured in a shape capable of accommodating a predetermined number of divided battery cells 100 therein. Specifically, the accommodation space S may be configured in a shape capable of accommodating the battery cells 100 therein through a cross-beam 230 described below.

The pack case 200 may be made of a material that may secure mechanical strength, such as a metal such as steel or SUS, or a plastic, in order to safely protect the battery cell 100 accommodated therein, or may include such a material.

The pack case 200 may include a venting portion H. The venting portion H may be configured to discharge venting gas released from the battery cell 100 to the outside of the accommodation space S. A plurality of venting portions H may be provided. The venting portion H may be provided in at least one of the plurality of accommodation spaces.

In addition, the pack case 200 may include a venting path P. The venting path P may indicate a passage through which venting gas or the like flows. The venting path P may be configured to be in communication with the accommodation space S through the venting portion H.

The venting path P may be formed inside the pack case 200. Here, the inside of the pack case 200 may indicate a predetermined space separately provided inside the pack case 200, or may indicate a hollow space formed in a plurality of beams or plates constituting the pack case 200, as illustrated in FIG. 3.

Accordingly, the venting portion H may be configured so that the venting gas generated in each accommodation space S flows into the venting path P formed inside the pack case 200. According to the above-implemented configuration of the present disclosure, when thermal runaway occurs in the battery cell 100, high-temperature gas or flames generated in the respective accommodation spaces S may be independently discharged to the outside, so that thermal propagation to the battery cells 100 provided in the other accommodation spaces S may be minimized. That is, according to the above-implemented configuration of the present disclosure, even if a thermal event occurs in any accommodation space S, it may be prevented from affecting the other accommodation spaces S. Accordingly, thermal runaway propagation may be prevented or suppressed inside the battery pack 20, so that the safety and reliability of the battery pack 20 may be guaranteed.

In addition, according to the above-implemented configuration of the present disclosure, the venting gas or the like generated in the battery cell 100 may flow into the venting path P through the venting portion H, and may then be quickly discharged to the outside of the pack case 200. Accordingly, heat accumulation inside the battery pack 20 may be dissipated.

Meanwhile, referring to FIG. 2, the pack case 200 may include a base frame 210 and a plurality of side frames 220.

The base frame 210 may be configured such that a plurality of battery cells 100 are seated thereon. The base frame 210 may form the bottom surface of the pack case 200 and may be configured in the shape of a rectangular plate. In addition, the base frame 210 may have a flat upper surface so that the module case 120 may be stably seated thereon.

The plurality of side frames 220 may be configured to extend upward from the respective edges of the base frame 210. The plurality of side frames 220 may be configured to surround a plurality of battery cells 100. More specifically, the plurality of side frames 220 may be configured as a right wall located at the end of the base frame 210 in the -Y-axis direction, a rear wall located at the end in the +X-axis direction, a left wall located at the end in the +Y-axis direction, and a front wall located at the end in the -X-axis direction, respectively, thereby forming side surfaces of the pack case 200.

Meanwhile, at least one or more of the plurality of battery cells 100 may be modularized into a plurality of battery modules 10. The plurality of battery modules 10 may be adjacently arranged in the front-back direction and/or the left-right direction in multiple rows. For example, as illustrated in FIG. 2, the plurality of battery modules 10 may be arranged in four rows along the front-back direction (X-axis direction) and in two rows along the left-right direction (Y-axis direction).

In addition, referring to FIG. 2, the pack case 200 may include center beams 240. The center beam 240 may be provided to connect the side frames 220 facing each other among the plurality of side frames 220. For example, as shown in FIG. 2, at least one of the center beams 240 may be configured to extend in the left-right direction to connect the right wall and the left wall of the side frames 220.

In addition, the center beams 240 may be configured to partition a plurality of battery modules 10 arranged in multiple rows. For example, the center beam 240 may be provided between the battery modules 10 arranged in two rows in the left-right direction. Accordingly, the plurality of battery modules 10 may be provided to be spaced apart from each other by the center beams 240.

In addition, the pack case 200 may include cross-beams 230. The cross-beams 230 may be configured to partition the plurality of accommodation spaces S.

A plurality of cross-beams 230 may be provided. The cross-beam 230 may be configured to connect the side frame 220 and the center beam 240. For example, as shown in FIG. 2, the cross-beam 230 may be configured to connect the left wall and the right wall of the side frames 220 and the center beam 240. Therefore, the cross-beams 230 may be provided between the plurality of battery modules 10 arranged in four rows along the front-back direction to partition the battery modules 10.

In this case, the cross-beam 230 may be configured to protrude further upward than the battery cell 100. According to the above-implemented configuration of the present disclosure, since the cross-beam 230 is configured to extend further upward than the battery cell 100, the adjacent accommodation spaces S may be reliably separated by the cross-beam 230 to prevent thermal propagation.

The venting path P may be formed inside the cross-beam 230. The venting path P of the cross-beam 230 may be provided to communicate with at least one accommodation space S. In addition, the venting portion H may also be provided in the cross-beam 230. In particular, the venting portion H may be formed on the side surface of the cross-beam 230 facing the battery module 10. A plurality of venting portions H may be provided in one cross-beam 230. Accordingly, the venting gas generated from the battery cell 100 may move directly to the venting path P formed inside the cross-beam 230 through the venting portion H provided in the cross-beam 230.

Meanwhile, referring to FIG. 2, the pack case 200 may include a discharge unit 250. The discharge unit 250 may be configured to discharge gas generated in the battery cell 100 stored inside to the outside of the pack case 200. The discharge unit 250 may be configured to be opened by the pressure of the venting gas when the internal pressure increases due to the venting gas generated inside the pack case 200, thereby discharging the venting gas to the outside of the pack case 200.

For example, the discharge unit 250 may be configured to be opened and closed depending on the internal pressure of the pack case 200. Alternatively, the discharge unit 250 may be configured in the form of a hole. Meanwhile, the present disclosure is not limited to a specific type or form of the discharge unit 250, and various discharge units 250 known at the time of filing the present disclosure may be applied to configure the battery pack 20 of the present disclosure.

Specifically, the discharge unit 250 may be provided on the side surface of the pack case 200, that is, on the side frame 220. The discharge unit 250 may be configured to discharge gas generated from the battery cell 100 stored inside the pack case 200 to the outside of the pack case 200. For example, the venting gas of the venting path P may be configured to be discharged to the outside of the pack case 200 through the discharge unit 250.

Meanwhile, a plurality of discharge units 250 may be provided. The discharge unit 250 may be provided on at least one of the plurality of side frames 220. Each discharge unit 250 may be formed on two or more side frames 220, or two or more discharge units 250 may be formed on one side frame 220.

Meanwhile, the number and positions of the discharge units 250 described in the embodiment in FIG. 2 are merely examples, and may vary.

FIG. 4 is a perspective view of a battery module included in a battery pack according to an embodiment of the present disclosure.

Meanwhile, referring to FIG. 2 and FIG. 4, a plurality of battery cells 100 may be modularized into one or more battery modules 10. That is, the battery pack 20 according to the present disclosure may include a plurality of battery modules 10, and a plurality of battery cells 100 included in the battery pack 20 may be divided and included in the plurality of battery modules 10. In this case, the plurality of battery cells 100 included in the battery module 10 may be electrically connected to each other.

Multiple battery modules 10 may be respectively provided in the accommodation spaces S of the pack case 200. In particular, the battery pack 20 according to the present disclosure may include a module case 11. The module case 11 may be configured to have an empty space formed inside and accommodate at least some of the plurality of battery cells 100 in the inner space. In particular, the module case 11 may be configured to accommodate the battery cells 100 provided in each accommodation space S. That is, the module case 11 may be included in each accommodation space S to group the plurality of battery cells 100 into several battery modules 10, and may be a physical boundary between the inner spaces of the respective battery modules 10.

In addition, although not shown in the drawing, the battery module 10 may include a bus-bar assembly and/or a module terminal electrically connected to the plurality of battery cells 100 accommodated therein.

The battery module 10 may include a venting hole 12. The venting hole 12 may be configured to discharge gas generated from the battery cell 100 stored inside the module case 11 to the outside of the module case 11.

Specifically, the venting hole 12 may be provided in the module case 11 to enable directional venting in a specific direction. In particular, the venting hole 12 may be provided on one surface of the module case 11 facing the venting portion H. For example, as shown in FIG. 3, in the case where the venting portion H is provided in the cross-beam 230, the venting hole 12 may be provided on the side surface of the module case 11 facing the cross-beam 230. Accordingly, the venting gas or the like may be guided to move directly toward the venting portion H.

According to the above-implemented configuration of the present disclosure, since the venting gas or the like discharged from the venting hole 12 facing the venting portion H is able to move directly to the venting path P formed in the pack case 200, the venting gas or the like may be discharged more quickly to the outside of the accommodation space S.

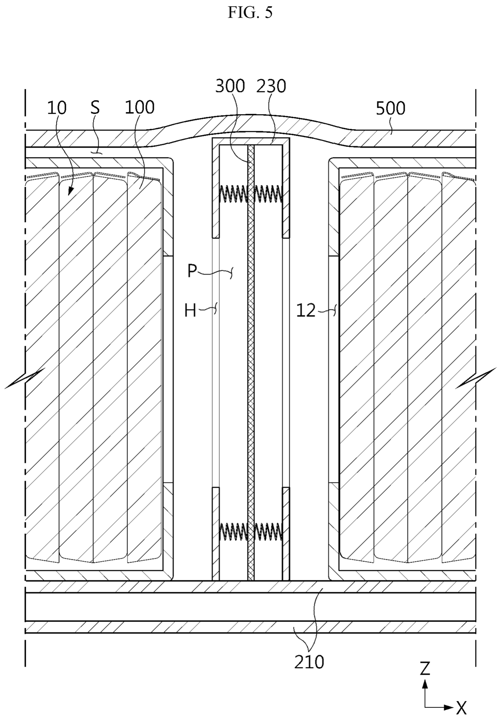

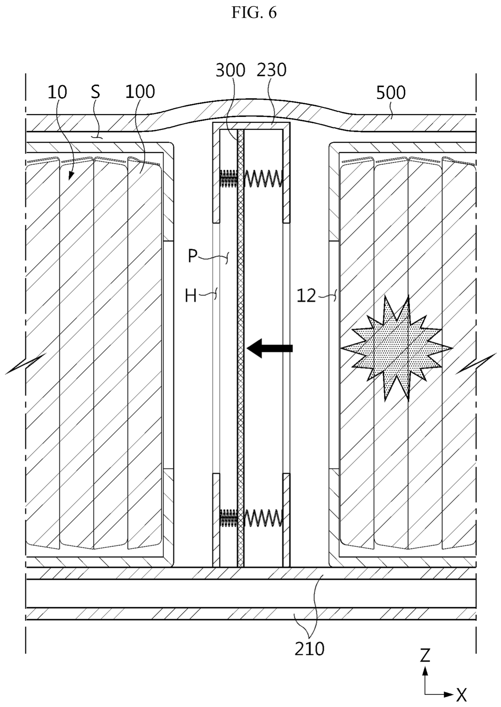

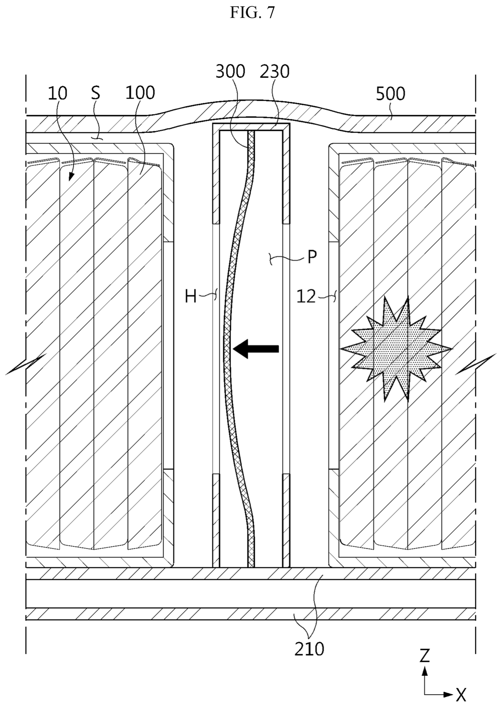

FIG. 5 is a cross-sectional view of a primary part of a battery pack to which a moving member is applied according to an embodiment of the present disclosure, and FIG. 6 is a drawing illustrating an embodiment in which a moving member moves when a thermal event occurs in the battery pack in FIG. 5. In addition, FIG. 7 is a drawing illustrating another embodiment in which a moving member moves when a thermal event occurs in the battery pack in FIG. 5.

Referring to FIGS. 5 to 7, the battery pack 20 according to an embodiment of the present disclosure may further include a moving member 300. The moving member 300 may be provided inside the venting path P. For example, as in the embodiment illustrated in FIG. 5, the moving member 300 may be provided on the cross-beam 230.

In this case, the moving member 300 may be configured to partition the venting path P. The moving member 300 may be configured to partition the venting path P in the horizontal or vertical direction. Accordingly, the venting path P may be divided into multiple parts. The divided venting paths P may be configured so as not to share venting gas or the like with each other. To this end, the length of the moving member 300 may be configured to correspond to the height or width of the venting path P.

The moving member 300 may be configured to be at least partially movable by the venting gas. The entirety of the moving member 300 may move, or a part thereof may move.

The moving member 300 may move in the direction in which the venting gas moves. Specifically, the moving member 300 may be configured to be movable by the pressurizing force of the venting gas introduced through a venting portion H provided in an accommodation space S (the right accommodation space in FIG. 5), where the thermal event occurs, toward a venting portion H provided in an accommodation space S (the left accommodation space in FIG. 5) adjacent thereto.

As shown in FIG. 6 and FIG. 7, when the moving member 300 moves by the venting gas, the volume of the venting path P may expand. Here, the expansion of the volume of the venting path P may indicate that the volume of the venting path P provided on the accommodation space S where the event occurs, among the venting paths P partitioned by the moving member 300, expands.

According to the above-implemented configuration of the present disclosure, since the volume of the venting path P through which the venting gas flows increases, more venting gas may flow through the venting path P. Accordingly, the venting gas or the like may be discharged more quickly and smoothly into the venting path P.

For example, as in the embodiment illustrated in FIG. 6, the moving member 300 may include a partition member configured in a plate shape and an elastic member connected to the partition member. The partition member may be made of a material having heat resistance and/or fire resistance. The partition member may be configured to be movable in at least one direction by the venting gas while partitioning the venting path P. In this case, the elastic member may be configured to control the movement of the partition member. That is, the partition member may be configured to be moved by the elastic force of the elastic member.

As another embodiment, as in the embodiment illustrated in FIG. 7, the moving member 300 may be configured to be elastically deformed at least in part by the venting gas. In this case, both ends of the moving member 300 may be fixed to the pack case 200, for example, to the cross-beam 230. In addition, the moving member 300 may be configured as an elastic pad or the like. According to the above embodiment, when venting gas is introduced into the venting path P through the venting portion H, the central portion of the moving member 300 may be elastically deformed by the pressure of the venting gas and may move in at least one direction.

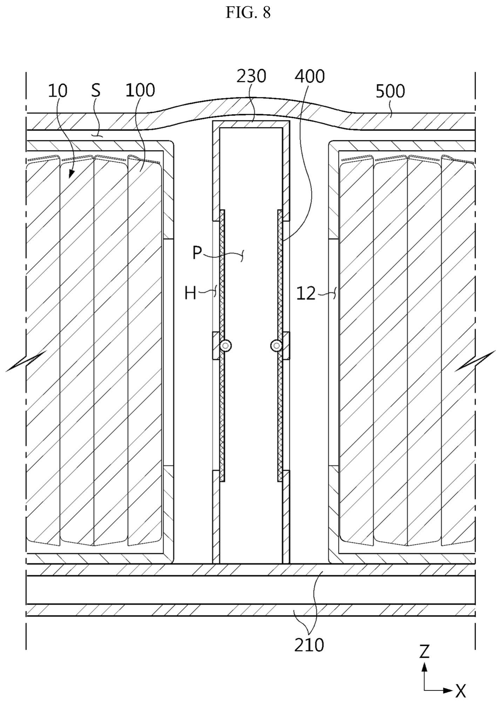

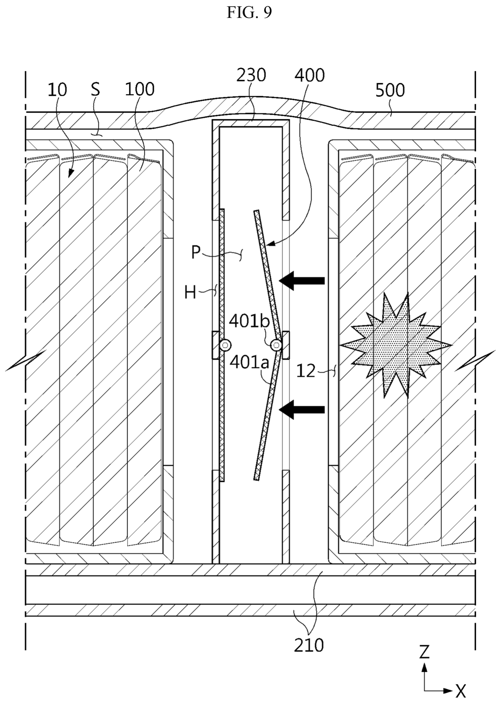

FIG. 8 is a cross-sectional view illustrating a primary part of a battery pack to which an opening/closing member is applied according to an embodiment of the present disclosure, and FIG. 9 is a drawing illustrating the opening/closing member that is opened when a thermal event occurs in the battery pack in FIG. 8.

Referring to FIGS. 8 and 9, the battery pack 20 according to an embodiment of the present disclosure may further include an opening/closing member 400. The opening/closing member 400 may be configured to cover the venting portion H. In addition, the opening/closing member 400 may be configured so that the venting portion H is opened by the venting gas or heat generated when a thermal event occurs in the battery cell 100. The opening/closing member 400 may be provided in the pack case 200 having the venting path P formed thereon. For example, as in the embodiment illustrated in FIG. 8, the opening/closing member 400 may be provided on at least one side of the cross-beam 230.

For example, referring to FIG. 8, the opening/closing member 400 may include a cover plate 401a and a hinge portion 401b.

Specifically, the cover plate 401a may be configured to cover the venting portion H. The cover plate 401a may be provided in the pack case 200. For example, as in the embodiment illustrated in FIG. 8, the cover plate 401a may be provided on the cross-beam 230. In this case, the cover plate 401a may be coupled to be rotatable by venting gas. Accordingly, the cover plate 401a may be configured to open or close the accommodation space S depending on the pressure of the venting gas due to the thermal runaway of the battery cell 100.

The cover plate 401a may be rotatably coupled to the venting portion H through the hinge portion 401b. The hinge portion 401b may be coupled to the cover plate 401a. Although not illustrated in detail, the hinge portion 401b may be configured to include an elastic body to control the rotation of the cover plate 401a. As an example, the elastic body may be a hinge spring.

Specifically, the cover plate 401a may maintain the closed state of the venting portion H by the elastic force of the elastic body provided in the hinge portion 401b when the thermal runaway does not occur in the battery cell 100.

On the other hand, the cover plate 401a may be configured to be opened toward the venting path P when the pressure inside the accommodation space S rises above a reference pressure due to the thermal runaway of the battery cell 100 to discharge the venting gas and/or flame to the outside of the accommodation space S. As described above, the case where the pressure inside the accommodation space S is above the reference pressure may indicate that the pressure inside the accommodation space S is greater than the pressure of the venting path P due to the generation of the venting gas. In this case, the pressurizing force of the air inside the accommodation space S applied to the cover plate 401a by the venting gas may be higher than the elastic force of the hinge portion 401b that is to maintain the closed state of the cover plate 401a.

According to the above-implemented configuration of the present disclosure, when a thermal event occurs in any accommodation space S, the cover plate 401a is opened by the pressure of the venting gas, so that the venting gas may be quickly discharged to the outside of the accommodation space S through the venting portion H.

When the cover plate 401a is opened by the pressure of the venting gas, the cover plate 401a may be configured to be opened at an acute angle with respect to the venting portion H. According to the above-implemented configuration of the present disclosure, the venting gas or the like released from the inside of the accommodation space S due to the thermal runaway of the battery cell 100 may be discharged to the venting path P along the inner surface of the cover plate 401a that is disposed at an angle with respect to the venting portion H. Accordingly, the flow of the venting gas may be more reliably guided toward the venting path P.

In addition, the cover plate 401a may be configured to be opened only in one direction. In this case, the one direction may be defined as a direction toward the inside of the venting path P. More specifically, the cover plates 401a provided in the respective venting portions H may be configured to be opened only in a direction toward the inside of the venting path P. Accordingly, the direction in which the cover plate 401a provided in the venting portion H of the accommodation space S, where the thermal event occurs, is opened may be configured to be opposite to the direction in which the cover plate 401a provided in the venting portion H of the adjacent accommodation space S is opened.

According to the above-implemented configuration of the present disclosure, the venting portion H provided in the accommodation space S where the thermal event occurs and the venting portion H provided in another accommodation space S may be prevented from being simultaneously opened. As a result, the movement of venting gas or heat may be suppressed from moving to the battery cells 100 provided in another accommodation space S, thereby enhancing the safety of the battery pack 10.

Furthermore, the cover plate 401a may be configured to close the accommodation space S when the venting gas is discharged to the outside so that the pressure inside the accommodation space S drops below a reference pressure. Here, the case where the pressure inside the accommodation space S is below the reference pressure may indicate that the pressure inside the accommodation space S is lower than the pressure of the venting path P because the venting gas is discharged to the outside. In this case, in addition to the pressure of the venting path P applied to the cover plate 401a, the elastic force of the hinge portion 401b that is to maintain the closed state of the cover plate 401a may be added. Therefore, when the venting gas is discharged to the outside so that the pressure inside the accommodation space S decreases, the cover plate 401a may be smoothly driven outward from the venting path P by the pressure difference between the inside of the accommodation space S and the venting path P, thereby closing the accommodation space S.

According to the above-implemented configuration of the present disclosure, when the amount of venting gas discharged decreases, the accommodation space S may be easily closed by the cover plate 401a, thereby reliably blocking the backflow of venting gas and/or flame into the accommodation space S. In addition, by blocking the inflow of oxygen into the accommodation space S, additional ignition may be suppressed inside the accommodation space S.

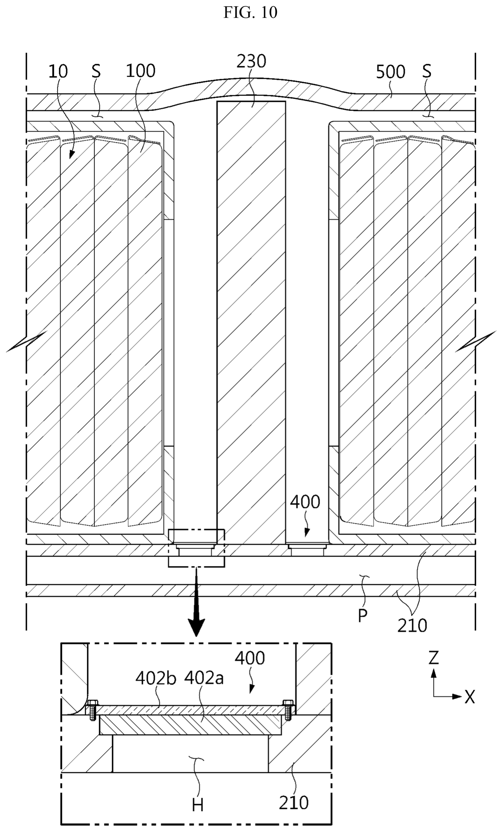

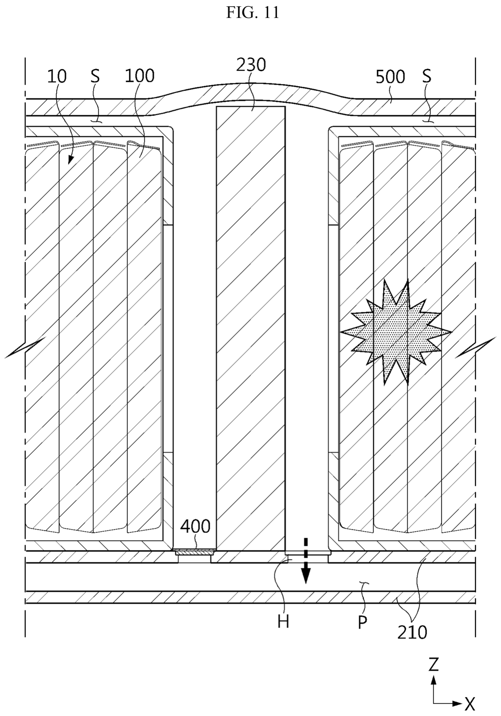

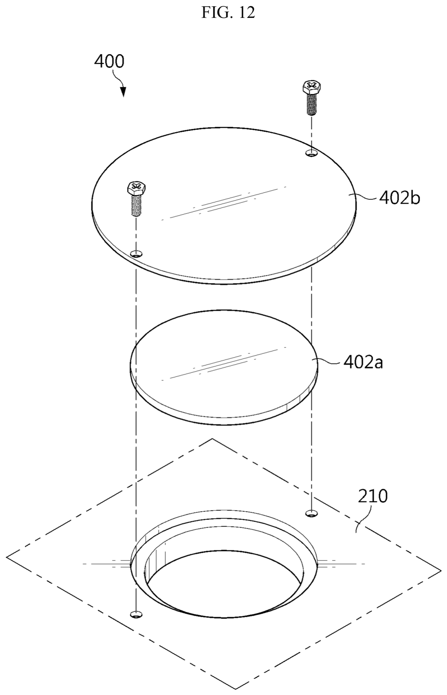

FIG. 10 is a cross-sectional view of a primary part of a battery pack to which an opening/closing member is applied according to another embodiment of the present disclosure, FIG. 11 is a drawing illustrating the opening/closing member that is opened when a thermal event occurs in the battery pack in FIG. 10, and FIG. 12 is an exploded perspective view of the opening/closing member applied to the battery pack in FIG. 10.

Referring to FIGS. 10 and 11, the opening/closing member 400 according to another embodiment of the present disclosure may be configured to be melted by heat.

Specifically, as illustrated in FIG. 10, the opening/closing member 400 may maintain the closed state of the venting portion H when a thermal runaway does not occur in the battery cell 100. On the other hand, as illustrated in FIG. 11, the opening/closing member 400 may be directly melted by heat such as high-temperature venting gas and/or flame generated inside the accommodation space S due to thermal runaway of the battery cell 100, thereby opening the venting portion H. Accordingly, the venting gas and/or flame may be discharged toward the venting path P.

According to the above-implemented configuration of the present disclosure, when a thermal event occurs in any accommodation space S, the opening/closing member 400 may be easily melted by the heat such as the venting gas and/or flame to open the venting portion H, thereby quickly discharging the venting gas to the outside of the accommodation space S. In addition, according to the above-implemented configuration of the present disclosure, the venting portion H provided in another accommodation space S adjacent thereto may remain in the closed state without the opening/closing member 400 being melted, thereby preventing thermal propagation.

Referring to FIGS. 10 and 12, the opening/closing member 400 may include a sealing portion 402a and a cover portion 402b. More specifically, a venting portion H may be provided on at least one side of the accommodation space S, and the sealing portion 402a may be inserted into the venting portion H, thereby sealing the venting portion H. Accordingly, the closed state of the venting portion H may be reliably maintained in the state where a thermal event such as thermal runaway does not occur.

In addition, the cover portion 402b may be provided on one side of the sealing portion 402a, that is, on the outside of the venting path P. The cover portion 402b may be configured to cover the sealing portion 402a. The cover portion 402b may be coupled to the pack case 200 by bolting or welding. Accordingly, since the cover portion 402b is provided, even if an external impact or vibration occurs, the sealing portion 402a may be prevented from being easily separated from the venting portion H, and the sealing portion 402a may be protected.

As an example, the venting path P may be formed in the base frame 210. That is, the venting path P may be formed at the bottom of the battery cells 100. In this case, the venting portion H may also be provided in the base frame 210. The venting portion H may be configured to be in communication with the venting path P formed in the base frame 210. Accordingly, the accommodation space S may communicate with the venting path P formed at the bottom of the battery cells 100 through the venting portion H.

In this case, a mounting portion may be formed on the side of the base frame 210 where the venting portion H is provided such that the sealing portion 402a is seated thereon. The mounting portion may be configured to prevent the sealing portion 402a from falling down to the venting path P below due to gravity. Accordingly, the sealing portion 402a may be seated on the mounting portion to stably seal the venting portion H.

Meanwhile, the cross-beam 230 may be configured to be spaced a predetermined distance apart from the battery cell 100. In this case, the venting portion H may be provided between the battery cell 100 and the cross-beam 230. That is, the venting path P may be formed in the base frame 210, and the venting portion H may be provided in the space formed between the battery cell 100 and the cross-beam 230 in the base frame 210.

In this case, as in the embodiment illustrated in FIG. 10, the cover portion 402b may be configured to protrude upward from the base frame 210. That is, the cover portion 402b may be provided between the battery cell 100 and the cross-beam 230. In addition, the cover portion 402b may be provided in contact with the battery cell 100 and the cross-beam 230. According to the above-implemented configuration of the present disclosure, the battery cell 100 and the cross-beam 230 may be configured not to move in the horizontal direction by the cover portion 402b. Accordingly, even if an external impact or vibration occurs, movement of the battery cells 100 may be prevented.

Referring back to FIGS. 1 to 3, the pack case 200 may be configured to have an upper opening. The battery pack 20 according to an embodiment of the present disclosure may further include an upper cover 500 coupled to the upper opening of the pack case 200. The upper cover 500 may be configured to seal the respective accommodation spaces S. The upper cover 500 may be configured to be curved to correspond to the structure of the pack case 200. For example, as in the embodiment illustrated in FIG. 3, the upper cover 500 may be configured such that the portion above the cross-beam 230 is curved to correspond to the shapes of the battery cell 100 and the cross-beam 230.

According to the above-implemented configuration of the present disclosure, since the upper cover 500 is configured to seal the respective accommodation spaces S, it is possible to minimize thermal damage to the battery cells 100 provided in the adjacent accommodation space S when a thermal event occurs. As a result, the safety of the battery pack 20 may be secured.

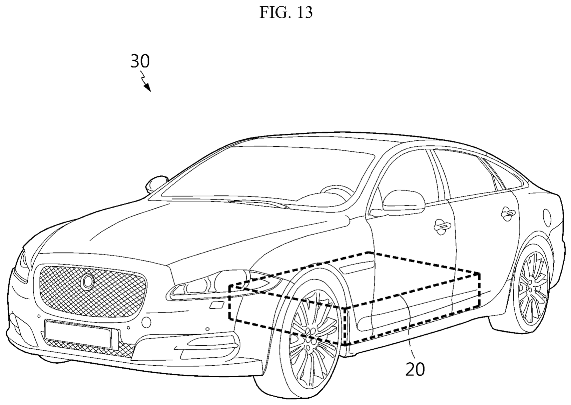

FIG. 13 is a schematically perspective view of a vehicle including a battery pack according to an embodiment of the present disclosure.

Referring to FIG. 13, a vehicle 30 according to an embodiment of the present disclosure may include one or more battery packs 20 according to an embodiment of the present disclosure. The vehicle 30 according to the present disclosure may be, for example, an electric vehicle, a hybrid vehicle, or a plug-in hybrid vehicle. The vehicle 30 includes a four-wheel vehicle and a two-wheel vehicle. The vehicle 30 may be operated by power supplied from the battery pack 20 according to an embodiment of the present disclosure.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

## Claims

1. A battery pack comprising:
a plurality of battery cells; and
a pack case having a plurality of accommodation spaces configured to respectively accommodate battery cells obtained by dividing the plurality of battery cells, at least one of the plurality of accommodation spaces having a venting portion configured to discharge venting gas released from the battery cell to the outside of the accommodation space, and a venting path configured to be in communication with the venting portion.

2. The battery pack according to claim 1,
wherein the pack case comprises
a cross-beam configured to partition the plurality of accommodation spaces, and having the venting path formed in an inner space, and
wherein the venting portion is provided on the cross-beam.

3. The battery pack according to claim 1, further comprising
a module case configured to accommodate the battery cells provided in each of the accommodation spaces, and having a venting hole formed on one surface facing the venting portion and configured to discharge the venting gas to the outside.

4. The battery pack according to claim 1, further comprising
a moving member provided inside the venting path to partition the venting path and configured to be at least partially movable by the venting gas.

5. The battery pack according to claim 4,
wherein a volume of the venting path is configured to expand when the moving member moves by the venting gas.

6. The battery pack according to claim 4,
wherein at least a portion of the moving member is configured to be elastically deformed by the venting gas.

7. The battery pack according to claim 1, further comprising
an opening/closing member configured to cover the venting portion and cause the venting portion to be opened by the venting gas or heat.

8. The battery pack according to claim 7,
wherein the opening/closing member comprises
a cover plate configured to cover the venting portion and to be rotatable by the venting gas, and
a hinge portion coupled to the cover plate.

9. The battery pack according to claim 7,
wherein the opening/closing member is configured to be melted by the heat.

10. The battery pack according to claim 1,
wherein the pack case comprises
a base frame configured so that the plurality of battery cells are seated thereon and having the venting path formed thereon, and
wherein the venting portion is provided in the base frame.

11. The battery pack according to claim 10,
wherein the pack case comprises
a cross-beam configured to partition the plurality of accommodation spaces and to be spaced a predetermined distance apart from the battery cell, and
wherein the venting portion is provided between the battery cell and the cross-beam.

12. The battery pack according to claim 11,
wherein the pack case is configured to have an upper opening,
further comprising an upper cover coupled to the upper opening of the pack case to seal the respective accommodation spaces.

13. A vehicle comprising a battery pack according to any one of claims 1 to 12.
